# FASCICULE DE BREVET EUROPEEN

(11) **EP 0 429 325 B1**
(45) Date de publication et mention de la délivrance du brevet: **15.06.1994**
(21) Numéro de dépôt: 90403069.9
(22) Date de dépôt: 30.10.1990
(51) Int. Cl.: C08G 77/58, C08G 79/00, C09D 183/14

(54) **Procédé de préparation d'une composition de revêtement à indice de réfraction élevé à base de polysiloxanes et de titanates et composition obtenue**
Verfahren zur Herstellung einer Beschichtungszusammensetzung mit hohem Brechungsindex auf Basis von Polysiloxanen und Titanaten und die so hergestellte Zusammensetzung
Process for preparing a coating composition having a high refraction index based on polysiloxanes and titanates and composition obtained therefrom

(30) Priorité: 30.10.1989 FR 8914224
(43) Date de publication de la demande: 29.05.1991
(73) Titulaire: ESSILOR INTERNATIONAL (Compagnie Générale d'Optique), F-94220 Charenton le Pont (FR)
(72) Inventeur: Leclaire,Yves, F-75019 Paris (FR)
(74) Mandataire: Thibon-Littaye, Annick

(56) Documents cités:
- EP-A- 0 244 952
- EP-A- 0 263 428
- DE-A- 3 407 087
- FR-A- 2 287 489
- GB-A- 728 751

## Description

La présente invention concerne les techniques de revêtement, telles qu'elles sont appliquées notamment dans la protection des verres dits organiques, réalisés en matière plastique.

Elle a plus précisément pour objet un procédé de préparation d'une composition de revêtement à base de résine de polysiloxane et elle s'étend à l'emploi de la composition obtenue comme vernis de protection antiabrasion, notamment sur des substrats en polycarbonates. Elle vise essentiellement à augmenter l'indice de réfraction des vernis de ce genre, et de ce fait, elle trouve un domaine d'application prévilégié dans l'optique ophtalmique.

Néanmoins, l'invention n'est pas limitée à cette application particulière, non plus qu'à la protection des polycarbonates. Elle peut aussi se révéler utile dans tous les cas, par exemple, où un substrat transparent demande un vernis à indice de réfraction élevé.

Les matières plastiques en général, et plus spécialement celles qui sont utilisées dans la fabrication des lentilles ophtalmiques, présentent généralement de mauvaises caractéristiques mécaniques de surface, avec notamment une faible résistance à l'abrasion et une sensibilité non négligeable aux solvants agressifs. On est donc couramment amené à les protéger par un revêtement antiabrasion. Les matériaux à base de polycarbonates n'échappent pas à ce besoin, tandis que l'on sait par ailleurs que l'intérêt de l'emploi des polycarbonates dans la fabrication de lentilles ophtalmiques réside principalement dans l'indice de réfraction élevé qu'ils permettent d'obtenir, avec des valeurs qui peuvent être de l'ordre de 1,5 à 1,6 par exemple. Mais il devient alors difficile de les protéger par un revêtement adapté, dont l'indice de réfraction doit être suffisamment proche de celui des lentilles pour ne pas provoquer des phénomènes d'interférences qui seraient préjudiciables à leur aspect esthétique et à leurs qualités optiques.

Or les compositions de revêtement utilisées à ce jour dans ce domaine conduisent tout au plus à des indices de l'ordre de 1,49 à 1,50. Il s'agit en général de compositions à base de silanes organiques polymérisables et de silice colloïdale, envisagées notamment pour revêtir des substrats en polycarbonate de bis-allyl diéthylène-glycol. Leur préparation, telle qu'elle est décrite par exemple dans le brevet américain US 3 986 997, implique une étape d'hydrolyse d'alcoxysilanes polyfonctionnels ou d'époxysilanes, donnant naissance à des groupes silanol réactifs qui se condensent en formant des polysiloxanes.

Pour améliorer ces compositions, on a proposé d'y introduire des composés organiques de titane, en particulier des esters de titane.

On peut rappeler ici qu'on sait, depuis longtemps, qu'il est possible d'améliorer les propriétés de revêtement à base de polysiloxane en partant de compositions dans lesquelles un composé métallique tel qu'un ester de titane est combiné avec un silane particulier, généralement un silane insaturé ou époxydé. En particulier le brevet français N° 1 473 183 de Saint-Gobain décrit ainsi des compositions de revêtement qui contiennent le produit de la réaction d'un titanate organique tel que le titanate de tétra-isopropyle avec un silane époxydé tel que le glycidoxypropyl triméthoxysilane (GLYMO).

Mais l'incorporation de titanates entraîne de grandes difficultés de préparation des compositions quand on procède par voie d'hydrolyse, en raison de la réactivité des titanates utilisés à l'égard des silanes organiques et de leur tendance à se dégrader en présence d'eau, pour former l'hydroxyde de titane tétravalent, qui est insoluble.

Le brevet français FR 2 446 308 propose d'hydrolyser complètement un titanate d'alkyle dans un mélange alcool-eau, afin d'obtenir un sel de dioxyde de titane colloïdal, que l'on mélange ensuite avec un hydrolysat de silanes. La composition obtenue est formée de silice colloïdale et de dioxyde de titane colloïdal, dispersés dans une solution de siloxanol dans un système de co-solvants eau-alcool. L'inconvénient d'une telle méthode réside dans la relative instabilité que les sols de dioxyde de titane manifestent quand on les ajoute aux hydrolysats de silanes, d'où il résulte que plus la concentration en dioxyde de titane s'accroît, plus il est difficile d'obtenir une dispersion satisfaisante des particules de dioxyde de titane dans la composition finale sans formation de précipité.

Par ailleurs, le brevet allemand DE 3 407 087 décrit la préparation d'un vernis à partir d'un mélange d'alkoxysilanes et de dérivés du titane tels le titanate d'éthyle et le titanate d'isopropyle, dont on provoque l'hydrolyse, dans un procédé en deux étapes : on réalise d'abord une précondensation en présence d'une quantité d'eau inférieure à celle nécessaire pour l'hydrolyse stoechiométrique des groupements hydrolysables présents, puis une condensation complémentaire avec une quantité d'eau au moins égale à celle correspondant à l'hydrolyse stoechiométrique des groupements hydrolysables restants. Une telle technique aboutit à la formation de précipités au cours de l'élaboration de la composition de revêtement, nécessitant des filtrations, ce qui occasionne des pertes de matières, rendant de ce fait les caractéristiques du revêtement obtenu incertaines.

La demande de brevet européen n° 0263428 décrit une technique similaire, en expliquant plus largement les réactions de condensation et prépolymérisation qui se produisent quand on prépare un hydrolysat d'alkoxysilane, partiellement hydrolysé de sorte qu'il contienne encore des groupes silanol actifs, auquel on ajoute ensuite un titanate d'alkyle tel que le tétraéthoxy-titane, avant d'ajouter de l'eau jusqu'à hydrolyse complète des groupements hydrolysables, pour obtenir ainsi une composition de revêtement, durcissable par le biais de réactions de condensation complémentaires au sein du prépolymère qu'elle contient.

L'expérience montre que là encore, les précautions à prendre pour éviter la formation de précipités de dioxyde de titane TiO₂ résultant de l'hydrolyse de l'alkoxysilane sont incompatibles avec la pratique d'une fabrication industrielle, alors qu'en outre, on ne peut obtenir une composition de revêtement présentant une durée de stabilité satisfaisante avant application sur un substrat ("pot-life" ou durée de vie en pot).

Et par chacun des procédés exposés dans l'art antérieur, il s'est avéré impossible de préparer ainsi des compositions de revêtement utiles, avec les concentrations en dioxyde de titane qui eurent été nécessaires pour accroître l'indice de réfraction du vernis final de la manière souhaitable.

Pour résoudre ces difficultés, l'invention propose d'utiliser des composés organiques de titane particuliers, constitués d'esters titaniques d'acides carboxyliques, ou titanates d'acyle, et de les mettre en oeuvre en lieu et place des titanates de l'art antérieur dans un procédé différent, convenablement adapté. Elle résulte de ce que l'on a constaté, de manière surprenante, qu'un groupement acyloxy fixé sur le composé de titane hydrolysable diminue la réactivité de ce composé de telle sorte qu'il n'est plus nécessaire, pour incorporer ce composé de titane à un hydrolysat d'alkoxysilane, de procéder à une hydrolyse des silanes dans des conditions rigoureuses tout en évitant la formation de précipités lors de la préparation des compositions de revêtement.

De fait, il est possible de réaliser une hydrolyse stoechiométrique d'alkoxysilanes dans des délais variables, qui peuvent être longs (environ 15 heures), puis d'ajouter l'acyloxytitane, sans provoquer l'apparition de précipités et en obtenant des teneurs élevées en Ti0₂ par rapport à la proportion de matières solides, donc des indices de réfraction élevés. A titre d'exemple, on peut aisément obtenir des indices atteignant 1,57 avec une teneur de 25 % de Ti0₂ dans l'extrait sec.

L'invention a principalement pour objet un procédé de préparation d'une composition de résine de polysiloxane pour revêtement antiabrasion à indice de réfraction élevé, caractérisé en ce qu'il comprend une première étape consistant à hydrolyser un premier constituant de type organo-silane en un hydrolysat d'alkoxysilane présentant des groupements silanol condensables, en présence d'une quantité d'eau stoechiométrique par rapport aux groupements hydrolysables, et une seconde étape consistant en la réaction de l'hydrolysat obtenu avec un second constituant formé d'un composé organique de titane comportant au moins une fonction ester titanique d'acide carboxylique avec addition d'eau, provoquant la formation d'un prépolymère siloxanique intégrant le titane.

Par la notion de titanate organique comportant au moins une fonction ester titanique d'acide carboxylique, on entend désigner ici, comme il se comprendra d'ailleurs de soi-même, les composés organiques de titane constitués par un titanate d'acyle, ou acyloxy-titane, au moins monofonctionnel.

Il s'agit de préférence de titanates d'acyle mono, di ou tri-fonctionnels. Ces composés répondent alors avantageusement à la formule (I) suivante, le titane étant tétravalent :

(RCOO)ₙ Ti R′ ₍₄₋ₙ₎ (I)

où :
- n peut prendre l'une quelconque des valeurs 1 à 4, et de préférence la valeur 1, 2 ou 3,
- R est un atome d'hydrogène ou un radical alkyle, avec une préférence parmi les radicaux alkyle pour ceux qui comportent de 1 à 5 atomes de carbone,
- et R′ est un atome d'hydrogène, un groupe hydroxy, ou un radical alkoxy, comportant de préférence de 1 à 5 atomes de carbone.

Suivant des modes de mise en oeuvre préférés, on peut utiliser notamment un titanate formique (où R est H) ou un titanate acétique (où R est -CH₃).

Comme exemples de tels acyloxytitanes, on peut donc citer les acétoxytitanes, en particulier CH₃COOTiR′₃, (CH₃COO)₂TiR₂′ (CH₃COO)₃TiR′, (CH₃COO)₄Ti, R′ ayant la signification déjà précisée pour la formule (I).

En pratique, on utilisera préférentiellement les composés de type acétoxyalkoxytitane, répondant à la formule (I) ou R est CH₃ et R′ est un radical alkoxy, comportant de préférence de 1 à 5 atomes de carbone. Parmi ces composés figure en particulier l'acétoxy-titanate d'isopropyle trifonctionnel de formule CH₃COOTi(O-iC₃H₇)₃. D'autres composés particulièrement intéressants sont ceux de formule HCOOTiR′₃, en particulier HCOOTi(O-iC₃H₇)₃.

Conformément à une caractéristique secondaire du procédé selon la présente invention, les acyloxytitanes (I) peuvent être obtenus à partir de tétra-alkoxytitanes dont on substitue les fonctions alkoxy par des fonctions acyloxy. Cette préparation s'effectue en l'absence d'eau, par réaction d'un tétra-alkoxytitane ou titanate de tétra-alkyle, de formule Ti(R′)₄ où les radicaux R′ peuvent prendre des valeurs identiques ou différentes, toutes choisies parmi celles indiquées précédemment pour la formule (I), avec un acide carboxylique RCOOH, où R a l'une quelconque des significations déjà indiquées.

La proportion d'acide utilisée pour cette réaction est avantageusement déterminée en fonction du nombre des fonctions alkoxy qu'on cherche à substituer, dans les proportions de 1 à 4 équivalents d'acide pour 1 équivalent de tétra-alkoxytitane. La réaction est effectuée de préférence en présence d'un solvant non aqueux approprié, tel qu'un alcool, par exemple l'isopropanol.

Le composé organique de titane ainsi obtenu peut éventuellement être isolé du milieu réactionnel de sa préparation, notamment quand il s'agit d'un acyloxytitane, et plus spécialement d'un acétoxytrialkoxytitane comme l'acétoxy-titanate d'isopropyle. Mais il peut aussi être conservé en solution dans ce milieu réactionnel pour être ensuite utilisé, directement sous cette forme anhydre, jusqu'à être mélangé à l'hydrolysat d'alkoxysilane.

La préparation de l'hydrolysat de silanes s'effectue à partir de composés et mélanges d'alkoxysilanes tels que ceux envisagés dans les documents de l'art antérieur, dont l'hydrolyse est conduite de sorte que l'eau introduite soit consommée en quasi-totalité dans la réaction d'hydrolyse des radicaux alkoxy.

Cependant, il est apparu avantageux, conformément à une autre caractéristique de l'invention, d'utiliser un mélange de silanes comportant au moins un alkoxysilane époxydé et au moins un alkoxysilane non époxydé, dans des proportions relatives préférentiellement comprises entre 1/3 et 3/1 en poids.

Les organoalkoxysilanes époxydés qu'on utilise dans le cadre de la présente invention présentent avantageusement la formule (II) suivante : 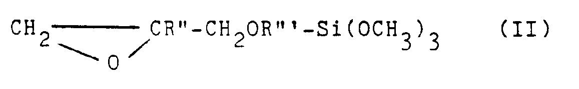
dans laquelle
. R˝ est un atome d'hydrogène ou un radical alkyle comprenant 1 ou 2 atomes de carbone,
. R‴ est un radical alxylène comprenant de 1 à 4 atomes de carbone.

On utilise plus particulièrement le gamma-glycidoxypropyltriméthoxy-silane, ci-après dénommé GLYMO. Mais on peut également utiliser d'autres alkoxysilanes organo-fonctionnels à fonction époxy, tels que ceux décrits dans les brevets précédemment cités, sans pour autant sortir du cadre de la présente invention. En outre, le radical OCH₃ de la formule (II) peut être plus généralement tout radical 0R³ dans lequel 0R³ est un groupe alkyle comportant de 1 à 5 atomes de carbone.

Quant à l'alkoxysilane non époxydé, il présente avantageusement la formule (III) ci-après :

R¹ₙSi(OR²)₄₋ₙ (III)

dans laquelle :
n peut prendre les valeurs 0, 1, 2 ou 3,
et R¹ et R² sont des radicaux alkyle comprenant de préférence de 1 à 5 atomes de carbone.

Comme alkoxysilanes (III), on utilise plus particulièrement le méthyltriméthoxysilane et/ou le tétraéthoxysilane.

Lors de la préparation d'une composition selon la présente invention, l'hydrolyse des alkoxysilanes est avantageusement effectuée en présence d'une quantité d'eau sensiblement stoechiométrique par rapport au nombre de groupements hydrolysables en groupes silanol. Ces groupements hydrolysables sont représentés notamment par les radicaux OR² et OCH₃ (ou OR³) dans les formules II et III ci-dessus. Par ailleurs, on laisse avantageusement la réaction d'hydrolyse se poursuivre jusqu'à ce que la quantité d'eau restant libre soit négligeable. Le temps de réaction est en général de plusieurs heures, et de préférence compris entre 10 et 20 heures. .

A ce stade, l'hydrolysat d'alkoxysilanes peut contenir d' autres constituants, qui sont en eux-mêmes classiques dans les vernis de polysiloxanes, et qui sont ajoutés aux alkoxysilanes avant ou après l'opération d'hydrolyse. Il peut s'agir notamment de silice colloïdale ou d'un autre oxyde métallique en dispersion dans l'hydrolysat, avantageusement dans une proportion comprise entre 10 et 30 % en poids du poids de matières solides de l'hydrolysat (extrait sec).

Lorsque les acyloxytitanes, notamment ceux de formule (I), sont ajoutés à un tel hydrolysat d'alkoxysilanes pratiquement exempt d'eau, on constate de façon surprenante qu'il ne se produit aucun précipité, cependant que le composé de titane s'intègre dans le réseau de prépolymère en cours de formation. Sans vouloir donner la moindre explication limitative aux phénomènes réactionnels, on peut penser qu'il se produit une hydrolyse partielle de l'acyloxytitane utilisant l'eau libérée par les réactions de polycondensation entre les groupes silanol de l'hydrolysat, et par suite, une copolymérisation du composé de titane avec les chaînes de polysiloxanes en formation.

Dans la mise en oeuvre de l'invention, on laissera de préférence ces réactions s'effectuer complètement avant de terminer la prépolymérisation du mélange par une addition complémentaire d'eau.

Il se dégage ainsi une caractéristique secondaire du procédé objet de l'invention, suivant laquelle ledit composé organique de titane est mis en contact avec ledit hydrolysat de silane alors que celui-ci est pratiquement exempt d'eau et entièrement hydrolysé et en ce que l'on ajoute ultérieurement au mélange obtenu une quantité d'eau au moins égale à celle nécessaire à l'hydrolyse stoechiométrique du composé organique de titane.

On remarquera que pour l'hydrolyse effectuée après incorporation du composé de titane, on peut utiliser sans inconvénient des quantités d'eau très largement supérieures à celles du besoin stoechiométrique des fonctions hydrolysables subsistant dans la composition.

Pour faciliter cette réaction finale, qui implique hydrolyse, condensation et polymérisation, il est souhaitable d'ajouter à la composition de l'invention un agent de réticulation des fonctions époxy éventuellement présentes dans l'hydrolysat de silanes, notamment dans le cas d'un constituant de formule (II). Cet agent peut être choisi d'une manière en soi connue, parmi ceux qui favorisent l'ouverture des fonctions époxy. Il peut s'agir notamment d'un acide polycarboxylique, ou d'un dérivé équivalent d'un tel acide, tel qu'un anhydride polyfonctionnel ou un imide polyfonctionnel. Comme acide polycarboxylique, on utilise de préférence l'acide itaconique.

La composition de revêtement ainsi préparée selon l'invention comporte en outre de préférence le catalyseur de durcissement qui peut être choisi parmi ceux connus pour leur action dans des compositions similaires à celles de la présente invention. On peut ainsi utiliser en particulier des acétylacétonates de métaux, préférentiellement de zinc, de fer ou de cobalt, des diamides, des imidazoles, des amines, des acides sulfoniques organiques et leurs sels d'amine, des sels de métaux alcalins d'acide carboxylique, des amidines cycliques, en particulier le diaza-1,8 bicyclo[5.4.0] undécène-7, ci-après dénommé D.B.U.

D'autres additifs peuvent être ajoutés aux compositions selon l'invention afin d'améliorer l'utilité des revêtements. Par exemple, des agents tensio-actifs, des absorbeurs d'ultraviolet, des antioxydants, etc. peuvent y être inclus.

Conformément à une forme de mise en oeuvre préférée de l'invention, visant à obtenir un vernis d'indice de réfraction particulièrement élevé, il est possible d'appliquer le procédé défini ci-dessus à la préparation d'une composition à forte proportion de titane, et ce toujours sans provoquer la moindre formation de précipités, ou même ultérieurement en cours de stockage du produit obtenu. On peut en particulier introduire le composé de titane dans l'hydrolysat de silanes dans une proportion correspondant à 20 à 30 % en poids de TiO₂ par rapport au poids de matières solides de la composition finale.

De ce fait, l'invention a également pour objet une composition de revêtement ainsi obtenue, caractérisée en ce qu'elle comporte un hydrolysat d'organoalkoxysilane copolymérisé avec un composé organique de titane, sous forme d'un sol aqueux stable où la teneur d'extrait sec en titane est au moins égale à 20 % en poids de TiO₂ par rapport au poids total de matières solides, et notamment de l'ordre de 25 % à 30 %, ainsi que l'utilisation d'une telle composition pour former un revêtement anti-abrasion sur un substrat en polycarbonate transparent à indice de réfraction élevé, notamment supérieur à 1,5.

Toutes les compositions préparées selon l'invention peuvent être présentées pour être conservées comme les vernis de polysiloxanes usuels, à appliquer sur substrats et durcis de la même manière.

On décrira maintenant l'invention plus en détails dans le cadre d'exemples particuliers de mise en oeuvre qui ne sont nullement limitatifs.

### EXEMPLE 1

### 1) Préparation de l'hydrolysat de silanes :

Pour cette réaction d'hydrolyse, la quantité d'eau est stoechiométrique.

On mélange : 79,2 g d'une dispersion aqueuse de silice colloïdale à 34 % de SiO₂ connue sous la dénomination Nalcoag 1034A,
avec : 5 gouttes d'HCl concentré

On ajoute ensuite, goutte à goutte, en 40 mn, sans refroidir : 73,06 g de méthyltriméthoxysilane
mélangé à : 101,85 g de glycidoxypropyltriméthoxysilane (GLYMO).

Lors de l'hydrolyse, la température s'élève jusqu'à 43,5 °C.

On laisse la réaction d'hydrolyse se poursuivre pendant environ 15 heures, puis on prépare séparément le composé du titane comme suit.

### 2) Préparation du composé organique de titane :

On mélange sans refroidir :
160,1 g de titanate d'isopropyle,
et 100 g d'isopropanol
avec 33,7 g d'acide acétique.

Lors de l'addition d'acide acétique, la température s'élève jusqu'à 64,5° C. On obtient ainsi le monoacétoxytriisopropyloxytitane.

### 3) Prépolymérisation :

Environ 12 mn après l'addition d'acide acétique, la température est redescendue à 50 °C.

On additionne alors l'hydrolysat de silanes goutte à goutte dans le composé de titane. Il ne se forme aucun précipité lors de cette addition.

On dilue ensuite la préparation avec de l'isopropanol puis, après environ 2 h d'agitation, on ajoute la quantité d'eau théorique nécessaire à l'hydrolyse stoechiométrique du titanate, c'est-à-dire 40,6 g de H₂0.

Là encore, il ne se forme aucun précipité.

On laisse la prépolymérisation s'effectuer à température ambiante pendant environ 48 h, puis on ajoute 18,33 g d'acide itaconique (servant d'agent de réticulation par ouverture des fonctions époxy du GLYMO) ainsi que 12,85 g de diazabicyclo-undécène (DBU, servant de catalyseur de durcissement thermique).

La composition de revêtement obtenue est diluée à 15 % d'extrait sec théorique, par addition d'isopropanol.

On ajoute 0,15 % de surfactant pour obtenir un produit prêt à l'emploi.

### 4) Application :

Un verre en polycarbonate de bisphénol A du type connu sous la marque commerciale type MAKROLON, où le motif monomère est le 2-2bis(4 hydroxyphényl)-propane est trempé dans le produit ci-dessus, puis soumis à un traitement thermique pendant 4 h dans une étuve à 120 °C.

Le traitement assure le durcissement du film de vernis déposé en surface du verre. Le verre ainsi revêtu présente une très bonne résistance à l'abrasion. Il est facilement colorable dans les bains usuels de coloration.

L'indice du vernis thermodurci est de 1,57. Son épaisseur est de l'ordre de 5 »m (microns) en moyenne.

L'adhérence du vernis sur son support est très bonne avant et après séjour du verre verni pendant 1 h dans l'eau bouillante (test AFNOR T 30038 modifié pour mesure d'adhérence).

### EXEMPLE 2

### 1) Préparation de l'hydrolysat de silanes :

Là encore, pour cette réaction d'hydrolyse, la quantité d'eau est stoechiométrique.
- On mélange :: 124,8 g de tétra-éthoxysilane
139,9 g de GLYMO

On ajoute ensuite, très rapidement et sans refroidir, une préparation comprenant :
75,2 g d'H₂O
10 g d'acide acétique

Lors de l'hydrolyse, la température s'élève jusqu'à 43 °C.

On laisse la réaction d'hydrolyse se poursuivre pendant environ 15 h, puis on prépare séparément le titanate comme suit.

### 2) Préparation du composé organique de titane :

On mélange, sans refroidir :
160,1 g de titanate d'isopropyle
100 g d'isopropanol
avec 33,7 g d'acide acétique.

Lors de l'addition d'acide acétique, la température s'élève jusqu'à 60 °C.

### 3) Prépolymérisation :

On laisse la température redescendre à environ 50 °C, puis on additionne l'hydrolysat de silanes goutte à goutte dans le titanate. Il n'apparaît aucun précipité lors de cette addition.

On dilue la préparation avec 300 g d'isopropanol puis on continue d'agiter pendant environ 2 h avant d'ajouter la quantité d'eau nécessaire à l'hydrolyse du titanate, soit 40,6 g de H₂O. Il ne se forme aucun précipité.

On laisse la prépolymérisation s'effectuer à température ambiante pendant environ 48 h, puis on ajoute 18,33 g d'acide itaconique ainsi que 12,85 g de DBU.

La composition obtenue est diluée à 15 % d'extrait sec théorique par addition d'isopropanol. On ajoute 1,5 %, d'agent tensio actif pour obtenir un produit prêt à l'emploi.

### 4) Application :

On trempe un verre en polycarbonate dans cette préparation, puis on le maintient pendant 4 h dans une étuve à 120 °C pour durcir le vernis.

Après ce traitement, ce verre présente une très bonne résistance à l'abrasion, il est colorable et l'indice du revêtement thermodurci est de 1,568. L'adhérence du vernis est très bonne avant et après un séjour de 1 h dans l'eau bouillante.

Suivant les conditions de l'application au trempé et le taux de dilution de la composition, on obtient des épaisseurs de vernis variant de 2 à 8 microns.

### EXEMPLE 3

On obtient des résultats analogues à ceux des exemples précédents en opérant de la même manière mais avec des constituants différents en nature et en proportions :
- Hydrolysat de silanes :
   243,6 g de méthyltriméthoxysilane
   208 g de tétraéthoxysilane
   381,6 g de GLYMO
   256 g d'eau
   51,2 g d'acide acétique
- Composé organique de titane
   133,4 g de tétratitanate d'isopropyle
   100 g de butanol
   28,2 g d'acide acétique
   conduisant au titanate monoacétoxylé
- Hydrolyse subséquente par 67,6 g d'eau, correspondant à 2 fois la quantité stoechiométrique d'hydrolyse du titanate.

Après application au trempé, la cuisson du vernis est poursuivie pendant 16 h à 120 °C.

### EXEMPLE 4

On opère comme dans l'exemple 3, mais en doublant la quantité d'acide acétique réagissant sur le tétra-ester de titane pour obtenir le titanate diacétoxylé.

### EXEMPLE 5

On opère comme dans l'exemple 3, sauf que dans la préparation du mono-acyloxy-trialkoxy-titane (où le radical alkoxy est le radical isopropyloxy), on remplace l'acide acétique par 21,6 g d'acide formique.

Dans les trois exemples qui précèdent, l'analyse de l'extrait sec fait apparaître la composition suivante en poids de matières solides :
- Titanate :: 25 % de TiO₂
- Silice :: 10 % de SiO₂
- Silanes :: 20 % de CH₃ Si O_{3/2}

alors que les meilleurs exemples des documents de l'art antérieur conduisent seulement à 16 % du TiO₂.

L'indice de réfraction des vernis obtenus selon l'invention après durcissement est dans tous les cas supérieur à 1,55.

Naturellement, l'invention n'est en rien limitée par les particularités qui ont été spécifiées dans les exemples qui précèdent ou par les détails des modes de mise en oeuvre particuliers choisis pour illustrer l'invention. Toutes sortes de variantes peuvent être apportées aux conditions opératoires de même qu'à la nature et aux proportions des constituants et réactifs sans sortir pour autant du cadre de l'invention.

On notera notamment que le plus souvent on peut faire varier les proportions du titanate entre 20 et 30 % du poids de TiO₂ dans l'extrait sec et celles des silanes entre 10 et 40 % en poids de CH₃-Si O_{3/2} dans l'extrait sec, tout en conservant les avantages de l'invention liés à l'absence de précipitation pendant la mise en oeuvre du procédé et les qualités générales des compositions et des vernis obtenus, telles que la stabilité de la viscosité.

## Revendications

1. Procédé de préparation d'une composition de résine de polysiloxane pour revêtement antiabrasion pour la protection de verres organiques, caractérisé en ce qu'il comprend une première étape consistant à hydrolyser un premier constituant de type organo-silane en un hydrolysat d'alkoxysilane présentant des groupements silanol condensables, en présence d'une quantité d'eau stoechiométrique par rapport aux groupements ainsi hydrolysables, et une seconde étape consistant en la réaction de l'hydrolysat obtenu avec un second constituant formé d'un composé organique de titane comportant au moins une fonction ester titanique d'acide carboxylique avec addition d'eau, provoquant la formation d'un prépolymère siloxanique intégrant le titane.

2. Procédé selon la revendication 1, caractérisé en ce que ledit composé organique de titane est un titanate d'acyle mono, di ou tri-fonctionnel.

3. Procédé selon la revendication 1 ou 2, caractérisé en ce que ledit composé organique de titane est un titanate formique ou acétique.

4. Procédé selon l'une quelconque des revendications 1, 2 ou 3, caractérisé en ce que ledit composé organique de titane est du type acétoxyalkoxytitane.

5. Procédé selon la revendication 4,
caractérisé en ce que ledit composé organique de titane est préparé par réaction en l'absence d'eau entre un titanate d'alkyle de formule Ti(R′)₄ et un acide carboxylique RCOOH, de préférence en milieu solvant non aqueux, notamment alcoolique, pour obtenir un composé répondant à la formule I :
(RCOO)ₙ Ti R′₍₄₋ₙ₎ (I)
où :
- n peut prendre l'une quelconque des valeurs 1 à 4, et de préférence la valeur 1, 2 ou 3,
- R est un atome d'hydrogène ou un radical alkyle, avec une préférence parmi les radicaux alkyle pour ceux qui comportent de 1 à 5 atomes de carbone,
- et R′ est un atome d'hydrogène, un groupe hydroxy, ou un radical alkoxy, comportant de préférence de 1 à 5 atomes de carbone.

6. Procédé selon la revendication 1 ou l'une quelconconque des revendications 2 à 5 qui en dépendent caractérisé en ce que ledit hydrolysat est préparé par hydrolyse d'un mélange d'organosilane comprenant au moins un alkoxysilane époxydé et au moins un alkoxysilane non époxydé.

7. Procédé suivant la revendication 6, caractérisé en ce que ledit mélange d'organo-silanes comprend, dans des proportions relatives selon un rapport compris entre 3/1 et 1/3 en poids :
- un alkoxysilane époxydé de formule : 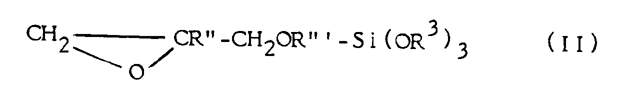 dans laquelle
. R˝ est un atome d'hydrogène ou un radical alkyle comprenant 1 ou 2 atomes de carbone,
. R‴ est un radical alkylène comprenant de 1 à 4 atomes de carbone.
- R³ est un radical alkyle comprenant de 1 à 5 atomes de carbone, notamment CH₃
- et un alkoxysilane non époxydé de formule :
R¹ₙSi(OR²)₄₋ₙ (III)
dans laquelle :
n peut prendre les valeurs O, 1, 2 ou 3,
et R¹ et R² sont des radicaux alkyle comprenant de préférence de 1 à 5 atomes de carbone.

8. Procédé selon l'une quelconque des revendications 1 à 7, caractérisé en ce que ledit composé organique de titane est mis en contact avec ledit hydrolysat de silane alors que celui-ci est pratiquement exempt d'eau et entièrement hydrolysé et en ce que l'on ajoute ultérieurement au mélange obtenu une quantité d'eau au moins égale à celle nécessaire à l'hydrolyse stoechiométrique du composé organique de titane.

9. Procédé selon l'une quelconque des revendications 1 à 8, caractérisé en ce que l'hydrolyse dudit premier constituant pour former ledit hydrolysat de silane est poursuivie pendant une durée comprise entre 10 et 20 heures.

10. Composition de revêtement telle qu'obtenue par le procédé selon la revendication 1 ou l'une quelconque des revendications 2 à 9 qui en dépendent, caractérisée en ce qu'elle comporte un hydrolysat d'organo-alkoxysilane copolymérisé avec un composé organique de titane, sous forme d'un sol aqueux stable où la teneur d'extrait sec en titane est au moins égale à 20 % en poids de TiO₂ par rapport au poids total de matières solides.

11. Composition de revêtement suivant la revendication 10, caractérisée en ce que ladite proportion est comprise entre 25 et 30 % en poids d'oxyde de titane par rapport au poids total de matières solides.

12. Utilisation d'une composition selon la revendication 10 ou 11, pour former un revêtement anti-abrasion sur un substrat en polycarbonate transparent à indice de réfraction égal ou supérieur à 1,5.

13. Utilisation du procédé selon l'une quelconque des revendications 1 à 9 ou d'une composition suivant la revendication 10 ou 11 pour le revêtement anti-abrasion de lentilles à indice de réfraction égal ou supérieur à 1,5.

## Patentansprüche

1. Verfahren zur Herstellung einer Polysiloxanharz- Zusammensetzung als Anti-Abrasionsbeschichtung zum Schutz organischer Gläser, dadurch gekennzeichnet, daß es eine erste Stufe, wobei man einen ersten Bestandteil vom Organosilantyp zu einem Alkoxysilanhydrolysat mit kondensierbaren Silanolgruppen in Anwesenheit einer, bezogen auf die so hydrolysierbaren Gruppen, stöchiometrischen Menge Wasser hydrolysiert und eine zweite Stufe umfaßt, wobei man das erhaltene Hydrolysat mit einem zweiten Bestandteil, der eine organische Titanverbindung mit wenigstens einer Carbonsäure-Titanesterfunktion darstellt, unter Zugabe von Wasser zur Reaktion bringt, wobei die Bildung eines das Titan integriert enthaltenden Siloxanpräpolymers bewirkt wird.

2. Verfahren nach Anspruch 1, dadurch gekennzeichnet, daß die organische Titanverbindung ein mono-, di- oder trifunktionelles Acyltitanat ist.

3. Verfahren nach Anspruch 1 oder 2, dadurch gekennzeichnet, daß die organische Titanverbindung Ameisensäure- oder Essigsäuretitanat ist.

4. Verfahren nach einem der Ansprüche 1, 2 oder 3, dadurch gekennzeichnet, daß die organische Titanverbindung vom Acetoxyalkoxytitan-Typ ist.

5. Verfahren nach Anspruch 4, dadurch gekennzeichnet, daß die organische Titanverbindung hergestellt wird durch Umsetzung eines Alkyltitanates der Formel Ti(R′)₄ mit einer Cabonsäure RCOOH in Abwesenheit von Wasser, vorzugsweise in einem nichtwäßrigen, insbesondere einem alkoholischen Lösungsmittelmilieu, wobei man eine Verbindung der Formel I erhält:
(RCOO)ₙ Ti R′₍₄₋ₙ₎ (I)
worin:
- n einen Wert von 1 bis 4 annehmen kann und vorzugsweise 1, 2 oder 3 bedeutet,
- R für ein Wasserstoffatom oder einen Alyklrest, vorzugsweise für einen Alkylrest, der 1 bis 5 Kohlenstoffatome aufweist, steht,
- und R′ für ein Wasserstoffatom, eine Hydroxygruppe oder einen Alkoxyrest, der vorzugsweise 1 bis 5 Kohlenstoffatome aufweist, steht.

6. Verfahren nach Anspruch 1 oder einem der davon abhängigen Ansprüche 2 bis 5, dadurch gekennzeichnet, daß das erwähnte Hydrolysat durch Hydrolyse einer Organosilanmischung hergestellt wird, die wenigstens ein epoxydiertes Alkoxysilan und wenigstens ein nicht-epoxidiertes Alkoxysilan umfaßt.

7. Verfahren nach Anspruch 6, dadurch gekennzeichnet, daß die erwähnte Organosilanmischung im relativen Gewichtsverhältnis von 3/1 bis 1/3 umfaßt:
- ein epoxydiertes Alkoxysilan der Formel: 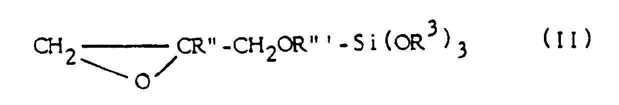 worin
. R˝ für ein Wasserstoffatom oder einen Alkylrest mit 1 oder 2 Kohlenstoffatomen steht,
. R‴ für einen Alkylenrest mit 1 bis 4 Kohlenstoffatomen steht,
- R³ für einen Alkylrest mit 1 bis 5 Kohlenstoffatomen, insbesondere für CH₃ steht,
- und ein nicht-epoxidiertes Alkoxysilan der Formel:
R¹ₙSi(OR²)₄₋ₙ (III)
worin:
n die Werte 0, 1, 2 oder 3 annehmen kann,
und R¹ und R² Alkylreste mit vorzugsweise 1 bis 5 Kohlenstoffatomen darstellen.

8. Verfahren nach einem der Ansprüche 1 bis 7, dadurch gekennzeichnet, daß die erwähnte organische Titanverbindung mit dem erwähnten Silanhydrolysat, das praktisch wasserfrei und vollständig hydrolysiert vorliegt, in Kontakt bringt und daß man später zu der erhaltenen Mischung Wasser in einer Menge gibt, welche zumindest gleich derjenigen ist, die zur stöchiometrischen Hydrolyse der organischen Titanverbindung erforderlich ist.

9. Verfahren nach einem der Ansprüche 1 bis 8, dadurch gekennzeichnet, daß die Hydrolyse des erwähnten ersten Bestandteils zur Bildung des Silanhydrolysates während einer Zeit von 10 bis 20 Stunden durchgeführt wird.

10. Beschichtungsmittel, erhalten nach dem Verfahren gemäß Anspruch 1 oder einem der davon abhängigen Ansprüche 2 bis 9, dadurch gekennzeichnet, daß es ein mit einer organischen Titanverbindung copolymerisiertes Organo-Alkoxysilanhydrolysat in Form eines stabilen wäßrigen Sols umfaßt, wobei der Titanfeststoffgehalt wenigstens gleich 20 Gew.-% TiO₂, bezogen auf das Gesamtgewicht der Feststoffe, beträgt.

11. Beschichtungsmittel nach Anspruch 10, dadurch gekennzeichnet, daß der erwähnte Gehalt zwischen 25 und 30 Gew.-% Titanoxid, bezogen auf das Gesamtgewicht der Feststoffe, beträgt.

12. Verwendung eines Mittels nach Anspruch 10 oder 11 zur Bildung einer Anti-Abrasionsbeschichtung auf einem transparenten Polycarbonatsubstrat mit einem Refraktionsindex gleich oder größer als 1,5.

13. Verwendung eines Verfahrens nach einem der Ansprüche 1 bis 9 oder eines Mittels nach Anspruch 10 oder 11 zur antiabrasiven Beschichtung von Linsen mit einem Refraktionsindex gleich oder größer als 1,5.

## Claims

1. Process for the preparation of a polysiloxane resin composition for an anti-abrasion coating for the protection of organic glasses, characterized in that it comprises a first stage which consists of hydrolysing a first constituent of an organo-silane type into an alkoxysilane hydrolysate having condensable silanol groups, in the presence of a quantity of water which is stoichiometric with respect to the groups which are thus hydrolysable and a second stage which consists of reacting the hydrolysate obtained with a second constituent formed of an organic titanium compound comprising at least one carboxylic acid titanic ester functional group, with the addition of water, bringing about the formation of a siloxane prepolymer incorporating titanium.

2. Process according to claim 1, characterized in that the said organic titanium compound is a mono, di or tri- functional acyl titanate.

3. Process according to claim 1 or 2, characterized in that the said organic titanium compound is a formic or acetic titanate.

4. Process according to any one of claims 1, 2 or 3, characterized in the said organic titanium compound is of the acetoxyalkoxytitanium type.

5. Process according to claim 4, characterized in that the said organic titanium compound is prepared by reacting an alkyl titanate of the formula Ti(R′)₄ in the absence of water with a carboxylic acid RCOOH, preferably in a non aqueous solvent medium, in particular alcoholic, in order to obtain a compound corresponding to formula I :
(RCOO)ₙTiR′ ₍₄₋ₙ₎ (I)
where :
- n may have any one of the values 1 to 4, and preferably the values 1, 2 or 3,
- R is a hydrogen atom or an alkyl radical, preferably an alkyl radical having 1 to 5 carbon atoms,
- and R′ is a hydrogen atom, a hydroxy group, or an alkoxy radical, preferably having 1 - 5 carbon atoms.

6. Process according to claim 1 or any one of the dependent claims 2 to 5, characterized in that the said hydrolysate is prepared by hydrolysis of a mixture of organo-silanes comprising at least one epoxydized alkoxysilane and at least one non-epoxydized alkoxysilane.

7. Process according to claim 6, characterized in that the said mixture of organo-silanes comprises, in relative proportions according to a ratio of between 3/1 and 1/3 by weight :
- an epoxydized alkoxysilane of formula : 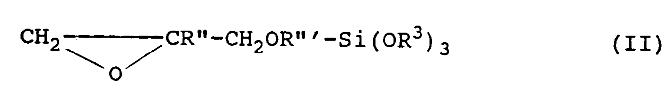 in which
. R˝ is a hydrogen atom or an alkyl radical having one or two carbon atoms,
. R‴ is an alkylene radical having 1 to 4 carbon atoms.
. R³ is an alkyl radical having 1 to 5 carbon atoms, in particular CH₃
- and a non-epoxydized alkoxysilane of formula :
R¹ₙSi(OR²)₄₋ₙ (III)
in which :
n may have the values 0, 1, 2 or 3,
and R¹ and R² are alkyl radicals preferably having 1 - 5 carbon atoms.

8. Process according to any one of the claims 1 to 7, characterized in that the said organic titanium compound is put into contact with the said silane hydrolysate whilst the latter is practically free of water and entirely hydrolysed and in that a quantity of water is subsequently added which is at least equal to that necessary for the stoichiometric hydrolysis of the organic titanium compound .

9. Process according to any one of claims 1 to 8, characterized in that hydrolysis of the said first constituent to form the said silane hydrolysate is carried out for a period of 10 to 20 hours.

10. Coating composition such as that obtained by the process according to claim 1 or any one of the dependent claims 2 to 9, characterized in that it comprises an organoalkoxysilane hydrolysate copolymerized with an organic titanium compound, in the form of a stable aqueous sol in which the titanium content of the dry extract is at least equal to 20% by weight of TiO₂ with respect to the total weight of solid matter.

11. Coating composition according to claim 10, characterized in that the said proportion lies between 25 and 30% by weight of titanium oxide with respect to the total weight of solid matter.

12. Use of a composition according to claim 10 or 11, to form an anti-abrasion coating on a transparent polycarbonate substrate with a refractive index equal to or greater than 1.5.

13. Use of the process according to any one of the claims 1 to 9 or of a composition according to claim 10 or 11 for an anti-abrasion coating on lenses having a refractive index equal to or greater than 1.5.
